# EUROPÄISCHE PATENTSCHRIFT

(11) **EP 2 188 427 B1**
(45) Veröffentlichungstag und Bekanntmachung des Hinweises auf die Patenterteilung: **14.12.2011**
(21) Anmeldenummer: 08787258.6
(22) Anmeldetag: 15.08.2008
(51) Int. Cl.: D04H 1/42, D04H 1/54, F16L 59/00

(54) **FASERVERBÜNDE UND DEREN VERWENDUNG IN VAKUUMISOLATIONSSYSTEMEN**
FIBRE ASSEMBLIES AND USE THEREOF IN VACUUM INSULATION SYSTEMS
COMPOSITES FIBREUX ET LEUR UTILISATION DANS DES SYSTÈMES D'ISOLATION SOUS VIDE

(30) Priorität: 14.09.2007 DE 102007043946
(43) Veröffentlichungstag der Anmeldung: 26.05.2010
(73) Patentinhaber: Evonik Degussa GmbH, 45128 Essen (DE)
(72) Erfinder: SCHULTZ, Thorsten, 64739 Hassenroth (DE); GRIESSER, Herbert, A-4840 Vöcklabruck (AT); MARKOWZ, Georg, 63755 Alzenau (DE); SCHÜTTE, Rüdiger, 63755 Alzenau-Hörstein (DE); EBERT, Hans-Peter, 97337 Dettelbach (DE); GEISLER, Matthias, 97074 Würzburg (DE); WACHTEL, Johannes, 97816 Lohr am Main (DE)
(86) Internationale Anmeldenummer: PCT/EP2008/060729
(87) Internationale Veröffentlichungsnummer: WO 2009/037059

(56) Entgegenhaltungen:
- EP-A- 0 088 191
- EP-A- 1 258 343
- WO-A-01/21876
- WO-A-80/01031
- DE-A1- 19 742 223
- US-A- 5 336 556
- US-A- 5 443 893
- US-A1- 2006 035 054
- US-B1- 6 280 814

## Beschreibung

Die vorliegende Erfindung betrifft einen Faserverbund, der vorzugsweise in Vakuumisolationssystemen eingesetzt werden kann. Darüber hinaus beschreibt die vorliegende Erfindung Isolationssysteme, die einen erfindungsgemäßen Faserverbund umfassen, sowie die Verwendung von Hochleistungskunststofffasern.

Im Zuge sich verknappender fossiler Energieressourcen und sich verschärfender Klimaschutznotwendigkeiten gewinnen energiesparende Technologien und der wirtschaftliche Energietransport sowie die Zwischenspeicherung von ressourcenschonend gewonnener Nutzenergie zunehmende Bedeutung. Eine aussichtsreiche Alternative für diese Ergänzung und Umstellung der fossilen Energiewirtschaft ist der Einsatz von cryogenen Energieträgern, beispielsweise eine ökologische Wasserstoff-Wirtschaft.

In allen diesen Feldern steigt daher der Bedarf nach leistungsfähigen thermischen Isolationswerkstoffen. Insbesondere ausgedehnte Cryo-Infrastrukturen können nur dann wirtschaftlich betrieben werden, wenn hervorragende thermische Isolationen die unvermeidlichen Wärmeeinträge aus der Umgebung extrem begrenzen.

Leitungssysteme zum Transport von kalten Flüssigkeiten sind unter anderem in DE-A-31 03 587, DE-A-36 30 399, EP-A-0 949 444, US 4,924,679, DE-A-100 31 491, DE 692 02 950 T2, DE 195 11 383 A1, DE 196 41 647 C1, DE 695 19 354 T2, DE-A-20 13 983 und WO 2005/043028 beschrieben.

Die Druckschrift DE-A-31 03 587 beschreibt einen wärmeisolierten Schlauch, der einen komplexen Aufbau aufweist. Als Isolationsmaterial wird insbesondere Schaumstoff vorgeschlagen. Allerdings wird in dieser Druckschrift kein System dargelegt, dessen Isolation durch die Verwendung von Vakuum verbessert werden kann.

Ein Schlauchsystem, welches unter Vakuum betrieben werden kann, wird in DE-A-36 30 399 dargelegt. Allerdings wird das Vakuum durch Pumpen erzeugt. Als Isolationsmaterial wird insbesondere eine Pulverschüttung beschrieben. Zur Ableitung des Gases aus dem Schlauch wird ein Vliesmaterial dargelegt, welches beim Anlegen des Vakuums an die Schüttung gepresst wird.

Ein flexibler cryogener Schlauch zum Transport von kalten Medien, insbesondere zum Transport verflüssigter Gase, wird in EP-A-0 949 444 dargestellt. Allerdings wird hierin nur die Verwendung von Fluorpolymeren beschrieben, wobei der Einsatz von Fasern aus diesem Material nicht dargelegt wird. Vielmehr werden Distanzhalter, insbesondere Bänder oder Scheiben aus diesen Kunststoffen beschrieben.

Die Verwendung von CO₂ zur Erzeugung eines Vakuums innerhalb eines Leitungssystems wird in US 4,924,679 dargelegt. Als Material wird jedoch ebenfalls die Verwendung von Fluorschläuchen vorgeschlagen, ohne dass ein Hinweis auf Fasermaterialien in dieser Druckschrift dargelegt wird.

In DE-A-100 52 856 wird vorgeschlagen, die Verdampfungswärme des cryogenen Mediums für die Abkühlung und Verflüssigung eines durch Phasenübergang Energie speichernden Mediums, beispielsweise von Luft, zu nutzen. Dadurch kann die Standzeit für die Lagerung des cryogenen Mediums erheblich verlängert werden. Bei der Befüllung und Entnahme von cryogenem Medium aus dem Speicherbehälter wird das Energie speichernde Medium herangezogen, um die Energiebilanz bei der Lagerung zu verbessern.

Auch der Einsatz von multiplen Energie-Erzeugungs-Speicherungs-Versorgungsnetz Haustechnik Solar-/Umweltwärme-Energiegewinn-Systemen ist bereits beschrieben worden. Ein Beispiel dafür findet sich in der DE-A-100 31 491. In diesem Dokument wird jedoch nur sehr allgemein auf vielfältige Möglichkeiten der Ausgestaltung solcher Systeme eingegangen.

Die DE 692 02 950 T2 beschreibt eine Übertragungsleitung für ein cryogenes Fluid. Diese weist thermisch gekoppelte Rohrleitungen zum Transport von cryogenem Fluid und von einem Kühlfluid auf, die mit einer Folie umwickelt sind, welche mit Verbindungseinrichtungen mit der Kühlrohrleitung verbunden ist.

Aus der DE 195 11 383 A1 ist ein Erdgasverflüssigungsverfahren bekannt, das mit einem Verdampfungsverfahren für kryogene Flüssigkeiten gekoppelt ist. Eine Weiterentwicklung dieses Verfahrens wird in der DE 196 41 647 C1 30 beschrieben.

Die DE 695 19 354 T2 offenbart eine Abgabevorrichtung mit Unterkühler für Cryoflüssigkeit.

In DE-A-20 13 983 wird ein Leitungssystem zur Übertragung von elektrischer Energie, von Kälteleistung oder zum Transport technischer Gase offenbart, das zum Aufbau eines umfangreichen Leitungsnetzes mit unterschiedlichen Funktionalitäten eingesetzt werden kann.

Schließlich beschreibt die Druckschrift WO 2005/043028 eine Leitungskomponente für ein Energienetz und ein Verfahren zur Versorgung von Verbrauchern mit cryogenen Energieträgern.

Die zuvor dargelegten Druckschriften beschreiben bereits Leitungssysteme, die zu einem Transport von cryogenen Energieträgern eingesetzt werden können. Allerdings besteht das dauerhafte Bedürfnis die Eigenschaften dieser Leitungssysteme zu verbessern.

Ein Teil der zuvor dargelegten Systeme beschreibt Rohrleitungen, die aus einem starren Material gefertigt sind. Allerdings lassen sich diese Isolationswerkstoffe nicht einfach an komplex geformte zu isolierende Bauteile anpassen. Bereits beim Anlegen des Vakuums muss die spätere Form des zu umschließenden Bauteils vorgegeben werden. Somit ist auch eine vollständige Umschließung eines Bauteils ohne in Wärmetransportrichtung verlaufende Kanten oder Nähte (sog. Wärmebrücken) praktisch nicht zu realisieren. Den teilweise hervorragenden Isolationseigenschaften solcher Isolationsbauteile in deren Fläche stehen somit im praktischen Einsatz zahlreiche unvermeidliche Wärmebrücken an den Übergängen von einem Isolationsbauteil zum nächsten gegenüber. Die gesamte effektive Isolationswirkung einer solcherart isolierten Rohrstrecke für cryogene Gase ist für den Transport über längere Strecken damit üblicherweise deutlich zu schlecht. Zudem ist, bedingt durch die Steifigkeit dieser Isolationsbauteile, deren Verarbeitung oft schwierig und geometrisch stark eingeschränkt.

Eine Möglichkeit zur Isolation komplex geformter Bauteile ist, diese mit einer umlaufenden gasdicht verschließbaren Hülle zu umgeben, den Hohlraum zwischen Hülle und Bauteil mit einer Schüttung (bestehend aus Pulvern) zu füllen und anschließend erst innerhalb dieser Hülle den Gasdruck abzusenken. Das Problem hierbei ist jedoch eine definierte Positionierung, insbesondere eine möglichst mittige Zentrierung des zu isolierenden Bauteils innerhalb der Hülle, da Pulverschüttungen zwar gut in auch verwinkelte Hohlräume einbringbar sind, jedoch kaum Halt für schwere oder bewegliche Bauteile bieten. Solche Schüttungen verhalten sich teilweise wie Flüssigkeiten, so dass das zu isolierende Bauteil leicht an den Rand der Hülle verschoben werden kann, wodurch lokal eine zu dünne Isolationsschicht entsteht. Abhilfe können nur geeignete Distanzhalter bringen, welche wiederum einerseits Wärmebrücken darstellen, andererseits die gesamte Konstruktion sehr komplex und schwer verarbeitbar machen.

Diese biegsamen Systeme werden unter anderem in WO 2005/043028 beschrieben, deren Isolation vielen Anforderungen nicht genügt. Zur Isolation dieser biegsamen Systeme wird in WO 2005/043028 die Verwendung von Schaumstoffen, Kieselsäurepulvern oder mineralischen Fasern vorgeschlagen. Schaumstoffe zeigen jedoch ein relativ hohes Wärmeleitvermögen. Mineralische Fasern, wie beispielsweise Asbest, sind aus gesundheitlichen Gründen zu vermeiden. Bei Verwendung von Kieselsäurepulvern kann die Isolationsleistung bei unsachgemäßem Verlegen des Leitungssystems abnehmen. Die Verwendung von Kunststofffasern als Isolationsmaterial wird in WO 2005/043028 nicht dargelegt. Allerdings zeigen viele dieser Isolationsmaterialien ähnliche Nachteile, wie die zuvor dargelegten Schaumstoffe.

So sind beispielsweise Isolationsmaterialien auf Basis von Kunststofffasern in den Schriften US 4,588,635, US 4,681,789, US 4,992,327 und US 5,043,207 der Firma Albany International Corp., Albany, N.Y. (USA) dargestellt. Allerdings finden sich in Beispielen lediglich Ausführungen zu PET-Vliesen, die als Isolationsmaterial in den zuvor dargelegten Leitungssystemen im Allgemeinen zu keinen besseren Eigenschaften führen, als die zuvor dargelegten Schaumstoffe. Die Kombination von Hochleistungsfasern mit Bindefasern, die Gegenstand des vorliegenden Faserverbundes sind, wird in diesen Druckschriften nicht explizit dargelegt.

In Anbetracht des hierin angegebenen und diskutierten Standes der Technik war es mit eine Aufgabe der vorliegenden Erfindung ein Isolationsmaterial zur Verfügung zu stellen, das ein hervorragendes Eigenschaftsprofil aufweist.

Das Eigenschaftsprofil umfasst insbesondere eine sehr geringe Wärmeleitfähigkeit des Materials und gute mechanische Eigenschaften, die auch bei tiefen Temperaturen erhalten bleiben. Zu den mechanischen Eigenschaften zählt insbesondere, dass das Material eine hohe Festigkeit gegenüber Belastungsdruck und eine hohe Elastizität bei hohen und tiefen Temperaturen aufweist, um beispielsweise eine definierte Positionierung der Innenleitungen sicherzustellen, so dass die Dämmeigenschaften im Wesentlichen erhalten bleiben. Weiterhin sollte eine Leitung mit Isolation eine ausreichende Biegsamkeit aufweisen, so dass die Leitung einfach und sicher verlegt werden kann.

Gelöst werden diese Aufgaben sowie weitere, die zwar nicht explizit genannt werden, sich aber aus den hierin diskutierten Zusammenhängen wie selbstverständlich abteilen lassen oder sich aus diesen zwangsläufig ergeben, durch den in Anspruch 1 beschriebenen Faserverbund. Zweckmäßige Abwandlungen dieses Faserverbunds werden in den auf Anspruch 1 rückbezogenen Unteransprüchen unter Schutz gestellt. Hinsichtlich eines Isolationssystems sowie der Verwendung liefern die Ansprüche 11 bzw. 10 eine Lösung der zugrunde liegenden Aufgaben.

Gegenstand der vorliegenden Erfindung ist dementsprechend ein Faserverbund umfassend Hochleistungskunststofffasern und Bindefasern, wobei die Faserverbund mindestens 70 Gew.-% Hochleistungskunststofffasern und höchstens 30 Gew.-% Bindefasern umfasst, welcher dadurch gekennzeichnet ist, dass der Faserverbund eine Dichte, gemessen bei einer Belastung quer zur Ebene der Hauptorientierung der Fasern von 1 mbar bis 1000 mbar, im Bereich von 50 bis 300 kg/m³ sowie eine schichtartige Anordnung der Fasern aufweist, wobei mindestens ein Teil der Fasern durch Berührungspunkte miteinander verbunden ist, die durch ein Erweichen der Bindefasern erhältlich sind und daß die Hochleistungskunststofffasern eine nicht-kreisförmige Querschnittsform aufweisen. Durch die erfindungsgemäßen Maßnahmen gelingt es überraschend ein Isolationsmaterial mit einem hervorragenden Eigenschaftsprofil zur Verfügung zu stellen.

Ein erfindungsgemäßer Faserverbund zeigt eine sehr geringe Wärmeleitfähigkeit des Materials und gute mechanische Eigenschaften, die auch bei tiefen Temperaturen erhalten bleiben. Zu den mechanischen Eigenschaften zählt insbesondere, dass der verarbeitete Faserverbund eine hohe Festigkeit gegenüber Belastungsdruck und eine hohe Elastizität bei hohen und tiefen Temperaturen aufweist. Dementsprechend kann der Faserverbund einer Leitung, die einen cyrogenen Energieträger leitet, einen ausreichenden Halt bieten, so dass eine definierte Positionierung dieser Leitungen beim Verlegen und beim Betrieb erhalten bleibt. Weiterhin können Leitungen, die einen erfindungsgemäßen Faserverbund umfassen, eine ausreichende Biegsamkeit aufweisen, so dass die Leitungen einfach und sicher verlegt werden können.

Darüber hinaus können erfindungsgemäße Faserverbünde und Isolationssysteme, die diese Faserverbünde umfassen, leicht und kostengünstig hergestellt und verarbeitet werden.

Ein Faserverbund der vorliegenden Erfindung umfasst Hochleistungskunststofffasern und Bindefasern. Die Hochleistungskunststofffasern sind in der Fachwelt bekannt. Hierunter sind insbesondere Kunststofffasern zu verstehen, die bei hohen Temperaturen einsetzbar sind. Vorzugsweise weisen die Kunststoffe, mit denen diese Fasern hergestellt werden, niedrige Festkörperwärmeleitfähigkeiten auf, sind sehr elastisch und hart, chemikalienbeständig, schwer entflammbar, und verfügen über einen relativ hohen IR-Extinktionskoeffizienten.

Zweckmäßig weisen die Hochleistungskunststofffasern einen Schmelzpunkt oder eine Glasübergangstemperatur von mindestens 200°C, besonders bevorzugt mindestens 230°C auf. Diese Eigenschaft kann mittels DSC (Differential Scanning Calorimetry) gemessen werden.

Die Festkörperwärmeleitfähigkeit bevorzugter Kunststoffe zur Herstellung von Hochleistungskunststofffasern beträgt vorzugsweise höchstens 0,7 W/(mK), besonders bevorzugt höchstens 0,2 W/(mK), beispielsweise gemessen gemäß nach ASTM 5930-97 oder DIN 52616 bei einer Temperatur von 293 K.

Zu den bevorzugten Hochleistungskunststofffasern zählen unter anderem Polyimidfasern, Polybenzimidazolfasern, Polyaramidfasern, Polyetherketonfasern und/oder Polyphenylensulfidfasern, wobei Polyimidfasern besonders bevorzugt sind.

Polyimide sind an sich bekannt und beispielsweise in Ullmann's Encyclopedia of Industrial Chemistry 5. Auflage auf CD-ROM dargelegt.

Polyimide können vorzugsweise ein Gewichtsmittel des Molekulargewichts im Bereich von 25000 bis 500000 g/mol aufweisen.

Bevorzugte Polyimide können durch Kondensation von Anhydriden mit Aminen und/oder Isocyanaten erhalten werden. Bevorzugt wird dabei ein mindestens bifunktionales Anhydrid mit einem mindestens bifunktionalen Isocyanat in stark polaren, aprotischen Lösungsmitteln wie z.B. NMP, DMF, DMAc oder DMSO unter Abspaltung von CO₂ umgesetzt. Alternativ kann ein mindestens bifunktionales Anhydrid mit einem mindestens bifunktionalen Amin umgesetzt werden, wobei bei dieser Variante die vorerst gebildeten Polyamidsäuren in einer zweiten Stufe imidisiert werden müssen. Diese Imidisierung wird herkömmlicherweise thermisch bei Temperaturen oberhalb von 150 bis 350°C oder chemisch unter Zuhilfenahme von Wasser entziehenden Mitteln wie Acetanhydrid und einer Base wie Pyridin bei Raumtemperatur durchgeführt.

Bevorzugte Monomerbausteine zur Herstellung der Polyimide umfassen unter anderem aromatische Diisocyanate, insbesondere 2,4-Diisocyanatotoluol (2,4-TDI), 2,6-Diisocyanatotoluol (2,6-TDI), 1,1'-Methylen-bis[4-isocyanatobenzol] (MDI), 1H-Indene-2,3-dihydro-5-isocyanato-3-(4-isocyanatophenyl)-1,1,3-trimethyl (CAS 42499-87-6); aromatische Säureanhydride, beispielsweise 5,5'-Carbonylbis-1,3-isobenzofurandion (Benzophenontetracarbonsäuredianhydrid, BTDA), Pyromellithsäureanhydrid (PMDA). Diese Monomerbausteine können einzeln oder als Mischung eingesetzt werden.

Gemäß einem besonderen Aspekt der vorliegenden Erfindung kann als Polyimid ein Polymer eingesetzt werden, welches aus der Umsetzung einer Mischung, die 5,5'-Carbonylbis-1,3-isobenzofurandion (BTDA) mit 2,4-Diisocyanatotoluol (2,4-TDI), 2,6-Diisocyanatotoluol (2,6-TDI), 1,1'-Methylen-bis[4-isocyanatobenzol] (MDI) umfasst, erhalten werden kann. Der Anteil an BTDA beträgt hierbei vorzugsweise mindestens 70 Mol-%, besonders bevorzugt mindestens 90 Mol-% und ganz besonders bevorzugt etwa 100 Mol.-%, bezogen auf die eingesetzten Säureanhydride. Hierbei beträgt der Anteil an 2,4-TDI vorzugsweise mindestens 40 Mol-%, besonders bevorzugt mindestens 60 Mol.-% und ganz besonders bevorzugt etwa 64 Mol.-%, bezogen auf die eingesetzten Diisocyanate. Der Anteil an 2,6-TDI beträgt gemäß dieser Ausführungsform vorzugsweise mindestens 5 Mol-%, besonders bevorzugt mindestens 10 Mol.-% und ganz besonders bevorzugt etwa 16 Mol.-%, bezogen auf die eingesetzten Diisocyanate. Der Anteil an MDI beträgt gemäß dieser Ausführungsform vorzugsweise mindestens 10 Mol-%, besonders bevorzugt mindestens 15 Mol.-% und ganz besonders bevorzugt etwa 20 Mol.-%, bezogen auf die eingesetzten Diisocyanate.

Vorzugsweise kann des Weiteren als Polyimid ein Polymer eingesetzt werden, welches aus der Umsetzung einer Mischung, die 5,5'-Carbonylbis-1,3-isobenzofurandion (BTDA) und Pyromellithsäureanhydrid (PMDA) mit 2,4-Diisocyanatotoluol (2,4-TDI) und 2,6-Diisocyanatotoluol (2,6-TDI) umfasst, erhalten werden kann. Hierbei beträgt der Anteil an BTDA vorzugsweise mindestens 40 Mol-%, besonders bevorzugt mindestens 50 Mol-% und ganz besonders bevorzugt etwa 60 Mol.-%, bezogen auf die eingesetzten Säureanhydride. In dieser Ausführungsform beträgt der Anteil an Pyromellithsäureanhydrid (PMDA) vorzugsweise mindestens 10 Mol-%, besonders bevorzugt mindestens 20 Mol-% und ganz besonders bevorzugt etwa 40 Mol.-%, bezogen auf die eingesetzten Säureanhydride. Der Anteil an 2,4-TDI beträgt gemäß dieser Ausführungsform vorzugsweise mindestens 40 Mol-%, besonders bevorzugt mindestens 60 Mol.-% und ganz besonders bevorzugt etwa 64 Mol.-%, bezogen auf die eingesetzten Diisocyanate. Der Anteil an 2,6-TDI beträgt gemäß dieser Ausführungsform vorzugsweise mindestens 5 Mol-%, besonders bevorzugt mindestens 10 Mol.-% und ganz besonders bevorzugt etwa 16 Mol.-%, bezogen auf die eingesetzten Diisocyanate.

Neben Homopolymeren können des Weiteren auch Copolymere als Polyimide eingesetzt werden, die neben den Imidbausteinen weitere funktionale Gruppen in der Hauptkette umfassen. Gemäß einem besonderen Aspekt der vorliegenden Erfindung können die Polyimide mindestens 50 Gew.-%, bevorzugt mindestens 70 Gew.-% und ganz besonders bevorzugt mindestens 90 Gew.-% von Monomerbausteinen abgleitet sein, die zu Polyimiden führen.

Besonders bevorzugt einzusetzende Polyamide können kommerziell unter der Handelsbezeichnung P84 von der Firma Inspec Fibres GmbH, Lenzing/Österreich oder von der Firma HP-Polymer GmbH, Lenzing / Österreich und unter der Bezeichnung Matrimid von Huntsman Advanced Materials GmbH/Bergkamen erhalten werden.

Die Hochleistungskunststofffasern weisen eine nicht-kreisförmige Querschnittsform auf. Nicht-kreisförmige Querschnittsformen weisen im Allgemeinen Ausbuchungen und Einbuchtungen auf. Unter Ausbuchtung ist hierbei eine Begrenzung der Faser in Querrichtung zu sehen, die einen maximalen Abstand vom Faserschwerpunkt aufweist und unter Einbuchtung eine Begrenzung der Faser, die einen minimalen Abstand vom Faserschwerpunkt aufweist. Die Ausbuchtungen bzw. Einbuchtungen sind dementsprechend lokale Maxima bzw. Minima des Abstandes von äußerer Begrenzung der Faser und dem Faserschwerpunkt. Die größte Strecke von Schwerpunkt der Faser zu mindestens einer der Ausbuchtungen, kann hierbei als äußerer Radius des Faserquerschnittes gesehen werden. Ähnlich kann ein innerer Radius definiert werden, der sich aus der minimalen Strecke zwischen dem Schwerpunkt der Faser und mindestens einer Einbuchtung ergibt. Vorzugsweise beträgt das Verhältnis von äußerem Radius zu innerem Radius mindestens 1,2, besonders bevorzugt mindestens 1,5 und ganz besonders bevorzugt mindestens 2. Die Querschnittsform der Fasern sowie die Ausdehnung können durch Elektronenmikroskopie bestimmt werden.

Zu diesen nicht-kreisförmigen Querschnittsformen zählen insbesondere multilobale Querschnitte und sternförmige Querschnitte, die drei, vier, fünf, sechs und mehr Ausbuchungen aufweisen. Besonders bevorzugt weist die Faser einen trilobalen Querschnitt auf. Polyimidfasern mit einem nicht-kreisförmigen Querschnitt, insbesondere einem trilobalen Querschnitt, können insbesondere dadurch erhalten werden, dass bei den üblichen Lösungsspinnverfahren eine Lösung mit einem relativ geringen Polymeranteil eingesetzt wird.

Neben Vollfasern können des Weiteren auch Hohlfasern eingesetzt werden. Bevorzugte Hohlfasern weisen ebenfalls eine nicht-kreisförmige Querschnittsform, insbesondere eine trilobale Querschnittsform auf.

Die Hochleistungsfasern können als Stapelfaser oder als Endlosfilament eingesetzt werden.

Vorzugsweise weisen die Hochleistungskunststofffasern einen Durchmesser im Bereich von 1 bis 50 µm, besonders bevorzugt 2 bis 25 µm und ganz besonders bevorzugt 3 bis 15 µm auf. Der Durchmesser bezieht sich hierbei auf die maximale Ausdehnung der Faser in Querrichtung, die durch den Schwerpunkt gemessen wird. Der Durchmesser kann unter anderem mit Elektronenmikroskopie (REM) bestimmt werden.

Zweckmäßig können die Hochleistungskunststofffasern eine Faserstärke von höchstens 10 dtex, vorzugsweise höchstens 5 dtex aufweisen. Vorzugsweise liegt die Faserstärke der Hochleistungskunststofffasern im Bereich von 0,05 bis 4 dtex, besonders bevorzugt 0,1 bis 1 dtex, gemessen bei der maximalen Ausdehnung.

Gemäß einem besonderen Aspekt der vorliegenden Erfindung können Hochleistungsfasern eingesetzt werden, die eine Kräuselung aufweisen. Zweckmäßig kann die Kräuselung im Bereich von 1 bis 50, besonders bevorzugt im Bereich von 3 bis 10 pro cm liegen. Die Kräuselung der Fasern kann durch optische Methoden bestimmt werden. Vielfach ergeben sich diese Werte aus der Herstellung

Gemäß einer weiteren bevorzugten Ausführungsform können Hochleistungsfasern verwendet werden, die keine oder nur eine geringe Kräuselung aufweisen.

Neben den Hochleistungskunststofffasern umfasst ein erfindungsgemäßer Faserverbund Bindefasern, die zum Verbinden der Hochteistungskunststofffasern dienen. Vorzugsweise weisen die Bindefasern einen Schmelzpunkt oder eine Glasübergangstemperatur von höchstens 180°C, besonders bevorzugt höchstens 150°C auf. Der Schmelzpunkt oder die Glasübergangstemperatur kann mittels DSC gemessen werden.

Vorzugsweise umfassen die die Bindefasern Polyolefinfasern, Acrylfasern, Polyacetatfasern, Polyesterfasern und/oder Polyamidfasern.

Bevorzugt weisen die Bindefasern einen Durchmesser im Bereich von 1 bis 50 µm, bevorzugt 2 bis 20 µm und ganz besonders bevorzugt 4 bis 10 µm auf. Der Durchmesser bezieht sich hierbei auf die maximale Ausdehnung der Faser in Querrichtung, die durch den Schwerpunkt gemessen wird.

Die Faserstärke bevorzugter Bindefasern beträgt vorzugsweise weniger als 10 dtex, besonders bevorzugt weniger als 5 dtex. Zweckmäßig zeigen bevorzugte Bindefasern eine Faserstärke im Bereich von 0,05 bis 4, besonders bevorzugt 0,1 bis 2 dtex, gemessen bei der maximalen Ausdehnung.

Der Faserverbund umfasst mindestens 70 Gew.-% Hochleistungskunststofffasern und höchstens 30 Gew.-% Bindefasern. Der Anteil an Hochleistungskunststofffasern liegt bevorzugt im Bereich von 75 Gew.-% bis 99,5 Gew.-%, besonders bevorzugt im Bereich von 80 bis 95 Gew.-%. Die obere Grenze des Anteils an Bindefasern ergibt sich aus der benötigten Leistungsfähigkeit des Faserverbundes, die untere Grenze aus den Anforderungen, die durch die Herstellungsmethoden der Isolationssysteme gegeben sind. Vorzugsweise liegt der Anteil an Bindefasern im Bereich von 0,5 Gew.-% bis 25 Gew.-%, besonders bevorzugt im Bereich von 5 Gew.-% bis 20 Gew.-%.

Der Faserverbund weist eine schichtartige Anordnung der Fasern auf, wobei mindestens ein Teil der Fasern durch Berührungspunkte miteinander verbunden sind, die durch ein Erweichen der Bindefasern erhältlich sind.

Der Begriff "schichtartige Anordnung der Fasern" bedeutet, dass eine Hauptorientierung der Fasern vorhanden ist, die im Wesentlichen in einer Ebene liegt. Hierbei ist der Begriff "Ebene" weit zu verstehen, da die Fasern eine dreidimensionale Ausdehnung haben und die Ebene auch gekrümmt sein kann. Der Ausdruck "im Wesentlichen" bedeutet dementsprechend, dass die Hauptorientierung der Fasern so ausgerichtet ist, dass ein möglichst geringer Anteil der Fasern in Richtung eines Wärmegradienten orientiert ist. Die Hauptorientierung ergibt sich aus der über die Länge der Faser gemittelten Richtung der Fasern, wobei kleinere Richtungsänderungen vernachlässigt werden können.

Eine schichtartige Anordnung in diesem Sinn wird im Allgemeinen bei der Herstellung von Vliesen oder Vliesstoffen erzielt. Bei diesen Verfahren werden Filamente oder Stapelfasern in einer Ebene angeordnet und anschließend verfestigt. Dies kann beispielsweise durch Trockenverfahren unter Verwendung von Luft (air-laid) oder durch Nassverfahren erfolgen. Vorzugsweise weisen nur wenige Fasern eine Hauptorientierung auf, die senkrecht zu dieser Ebene ausgerichtet ist. Dementsprechend wird der Faserverbund im Allgemeinen nicht durch eine ausgeprägte Vernadelung verfestigt.

Der Faserverbund wird durch ein Erweichen und anschließendes Abkühlen der Bindefasern erhalten. Verfahren hierzu sind insbesondere in den Schriften US 4,588,635, US 4,681,789, US 4,992,327 und US 5,043,207 der Firma Albany International Corp., Albany, N.Y. (USA) dargestellt. Die Temperatur hängt insbesondere von der Erweichungstemperatur (Glasübergangstemperatur oder Schmelztemperatur) der Bindefasern ab. Hierbei ist es vielfach nicht notwendig, dass alle Fasern durch Berührungspunkte miteinander verbunden sind, die durch ein Erweichen der Bindefasern erhältlich sind. Je höher dieser Anteil, desto bessere mechanische Eigenschaften weist der Verbund auf. Allerdings kann die Wärmeleitfähigkeit des Verbundes zunehmen. In diesem Zusammenhang sei erwähnt, dass die Fasern im Verbund auch Berührungspunkte aufweisen können, die nicht durch ein Erweichen der Bindefasern erhalten wurden. Hierzu gehören insbesondere Punkte, an denen sich die Hochleistungskunststofffasern berühren.

Innerhalb einer Ebene der schichtartigen Anordnung können die Fasern vorzugsweise eine Hauptorientierung aufweisen, wobei die Hauptorientierung der Fasern verschiedener Ebenen besonders bevorzugt einen Winkel zueinander zeigen. Der Begriff "Hauptorientierung der Faser" ergibt sich aus der Durchschnittsorientierung der einzelnen Faser über deren Gesamtlänge. Der Winkel, den die orientierten Fasern verschiedener Ebenen zueinander aufweisen können, liegt vorzugsweise im Bereich von 5° bis 175°, besonders bevorzugt im Bereich von 60° bis 120°. Die Hauptorientierung der Fasern sowie die Winkel der Fasern verschiedener Ebenen zueinander können durch optische Methoden bestimmt werden. Vielfach ergeben sich diese Werte aus der Herstellung, wobei die Orientierung der Fasern beispielsweise durch Kardieren vorgegeben werden kann.

Eine geringe Dichte geht vielfach mit einer besonders geringen Wärmeleitfähigkeit des Faserverbundes einher. Andererseits nimmt die Belastbarkeit des Faserverbundes durch eine geringe Dichte ab, so dass hierdurch vielfach die Stabilität zu gering werden kann, um einer Leitung, die einen cyrogenen Energieträger leitet, einen ausreichenden Halt zu bieten. Mit überraschendem Vorteil weist daher ein erfindungsgemäßer Faserverbund, der beispielsweise in einem Isolationsmaterial vorgesehen ist, eine Dichte im Bereich von 50 bis 300 kg/m³, bevorzugt 100 bis 150 kg/m³ auf, wobei diese Werte unter einer Belastung gemessen werden, die durch die Verarbeitung und den Einbau in das Isolationsmaterial bedingt sind. Diese Belastung quer zur Ebene der Hauptorientierung der Fasern, bei der diese Dichtewerte gelten, liegt im Bereich von 1 mbar bis 1000 mbar, wobei diese Dichtewerte beispielsweise bei einer Belastung von 1 mbar, 10 mbar, 50 mbar, 100 mbar, 200 mbar, 400 mbar, 600 mbar, 800 mbar oder 1000 mbar gemessen werden können.

In unbelastetem Zustand, insbesondere vor der Verarbeitung kann der Faserverbund vorzugsweise eine Dichte im Bereich von 1 bis 30 kg/m³, besonders bevorzugt 5 bis 20 kg/m³ aufweisen, wobei diese bei einer Dicken des unverarbeiteten Faserverbundes von maximal 5 cm gemessen werden kann.

Vorzugsweise beträgt die mittlere Wärmeleitfähigkeit eines erfindungsgemäßen Faserverbundes gemessen senkrecht zu den Ebenen der schichtförmigen Anordnung höchstens 10,0*10⁻³ W(mK)⁻¹, bevorzugt höchstens 5,0 mW(mK)⁻¹ und besonders bevorzugt höchstens 1,0*10⁻³ W(mK)⁻¹. Die Messung kann beispielsweise bei Raumtemperatur (293 K) und/oder bei tiefen Temperaturen, beispielsweise 150 K oder 77 K, durchgeführt werden, wobei das Material einer Belastung bei diesen Bedingungen für mindestens 14 Tage standhält. Die Prüfung wird vorzugsweise bei einem geringen Absolutdruck, beispielsweise einem Druck von 1 mbar oder weniger gemäß DIN EN 12667 ("Bestimmung des Wärmedurchlasswiderstands nach dem Verfahren mit dem Platten-Gerät und dem Wärmestrommessplatten-Gerät für Stoffe mit hohem und mittleren Wärmedurchlasswiderstand") durchgeführt. Die Bestimmung kann beispielsweise bei einem Gasdruck innerhalb des zu vermessenden Faserverbundes von 0,01 mbar und bei einem Belastungsdruck, der durch die Messapparatur auf den zu vermessenden Faserverbund quer zur Ebene der Hauptorientierung der Fasern ausgeübt wird, von 70 mbar durchgeführt werden.

Die zuvor dargelegten Wärmeleitfähigkeitswerte können insbesondere dadurch erzielt werden, dass senkrecht zur Faserebene der schichtförmigen Anordnung nur eine geringe Wärmeübertragung erfolgt. Daher wird vorzugsweise auf eine ausgeprägte Vernadelung oder auf eine Verfestigung mit einer hohen Menge an flüssigen Bindemitteln verzichtet, die zu Wärme- bzw. Kältebrücken senkrecht zur schichtförmigen Faseranordnung führen können. Eine geringe Vernadelung oder die Verwendung von geringen Mengen an flüssigen Bindemitteln kann jedoch eingesetzt werden, solange diese Maßnahmen nur zu einer geringen Erhöhung der Wärmeleitfähigkeit führen.

Besonders bevorzugt weist ein erfindungsgemäßer Faserverbund eine hohe Stabilität auf, wobei diese Stabilität auch in Richtung senkrecht zur Ebene der Hauptorientierung der Fasern gegeben ist. So zeigt ein erfindungsgemäßer Faserverbund nach der Verarbeitung bzw. im Isolationsmaterial eine relativ geringe Kompressibilität, die bei einer Zunahme der Belastung von 1 mbar vorzugsweise höchstens 50% beträgt, d.h. bei einer Erhöhung der Belastung von 1 mbar nimmt die Dicke des Faserverbundes um höchstens 50%, vorzugsweise um höchstens 30%, insbesondere bevorzugt um höchstens 10% und ganz besonders bevorzugt um höchstens 5%, bezogen auf die ursprüngliche Dicke des verarbeiteten Verbundes, ab.

Ein erfindungsgemäßer Faserverbund kann insbesondere als Isolationsmaterial, bevorzugt in Vakuumisolationssystemen eingesetzt werden. Dementsprechend sind auch Isolationssysteme, insbesondere Vakuumisolationssysteme, die die zuvor dargelegten Faserverbünde aufweisen, Gegenstand der vorliegenden Erfindung.

Der Begriff Vakuumisolationssystem beschreibt ein wärmeisoliertes System, dessen Isolationsleistung durch Vakuum verbessert wird. Vakuum bedeutet in diesem Zusammenhang, dass im System ein Absolutdruck vorhanden ist, der vorzugsweise kleiner oder gleich 500 mbar, besonders bevorzugt kleiner oder gleich 50 mbar und ganz besonders bevorzugt kleiner oder gleich 1 mbar ist. Hierdurch wird die Wärmeleitfähigkeit des Systems stark verringert.

Vakuumisolationssysteme sind unter anderem in DE-A-36 30 399, EP-A-0 949 444, US 4,924,679, DE-A-100 31 491, DE 692 02 950 T2, DE 195 11 383 A1, DE 196 41 647 C1, DE 695 19 354 T2, DE-A-20 13 983 und WO 2005/043028 beschrieben.

Das Vakuum kann beispielsweise mechanisch, insbesondere durch eine Vakuumpumpe erzeugt werden. Vorzugsweise kann sich das Vakuum durch das Verfestigen oder Kondensieren eines sich in dem Vakuumsystem befindlichen Fluids, insbesondere eines Gases bilden. So kann das Fluid insbesondere dadurch verfestigt oder kondensiert werden, dass das Fluid abgekühlt wird. Zu den bevorzugten Fluiden zählen insbesondere Stickstoff, Sauerstoff, Kohlendioxid und/oder leichtflüchtige Kohlenwasserstoffe, die einen Siedepunkt unterhalb von 0°C bei 1 bar aufweisen. Leichtflüchtige Kohlenwasserstoffe sind unter anderem Methan, Ethan, Propan und/oder Butan.

Bevorzugte Vakuumisolationssysteme dienen insbesondere zum Transport von cryogenen Fluiden, insbesondere Flüssigkeiten. Der Begriff "cryogenes Fluid" bezeichnet ein kaltes Fluid, das vorzugsweise eine Temperatur von höchstens -40°C, besonders bevorzugt höchstens -100°C und ganz besonders bevorzugt -150°C oder weniger aufweist. Diese Vakuumisolationssysteme umfassen mindestens eine Leitung oder einen Leitungsverbund, in der ein cryogenes Fluid transportiert werden kann.

Der Begriff Leitungsverbund bezeichnet im Rahmen der vorliegenden Erfindung ein System, das mindestens zwei unterschiedliche Leitungen umfasst. So kann der Leitungsverbund beispielsweise mindestens zwei Innenleitungen aufweisen, die Flüssigkeiten oder Gase transportieren können. Daneben kann der Leitungsverbund auch mindestens eine Innenleitung für den Transport von Flüssigkeiten und/oder Gasen und mindestens eine Daten- und/oder Stromleitung umfassen. Besonders bevorzugte Leitungsverbünde umfassen mindestens zwei Innenleitungen für einen Stofftransport und mindestens eine Daten- und/oder Stromleitung.

Im Allgemeinen umfassen diese Leitungen oder Leitungsverbünde mindestens eine Innenleitung und einen Außenmantel, wobei das cryogene Fluid durch die Innenleitung geleitet wird und der Außenmantel die Leitung gegenüber der Umgebung abschließt, so dass sich zwischen der Innenleitung und dem Außenmantel ein Vakuum ausbilden kann. Dementsprechend dient der Außenmantel insbesondere zum Erhalt der Dämmwirkung.

Vorzugsweise weist die Leitung oder der Leitungsverbund eine abgerundete, beispielsweise eine kreisförmige oder eine elliptische Querschnittsform auf, wobei sowohl mindestens eine der Innenleitungen als auch der Außenmantel eine abgerundete, beispielsweise kreisförmige oder eine elliptische Querschnittsform haben können.

Gemäß einem besonderen Aspekt der vorliegenden Erfindung kann der Leitungsverbund des Vakuumssystems mindestens zwei Innenleitungen umfassen, wobei eine Innenleitung zum Ableiten von Gasen und/oder zum Leiten eines Energieüberträgermediums vorgesehen ist.

Zur Verbesserung der Isolationsleistung kann der Außenmantel mit einer Metallschicht versehen werden. Diese Metallschicht kann beispielsweise durch Aufdampfen von Metall, durch einen metallhaltigen Lack oder durch eine Metallfolie aufgebracht werden. Dies kann an der äußeren Oberfläche, an der Innenoberfläche oder beidseitig erfolgen.

In vielen Fällen genügt ein kleiner Durchmesser zur Übertragung einer ausreichenden Menge an cryogenem Fluid. Vorzugsweise ist daher der innere Durchmesser der Innenleitung kleiner oder gleich 50 mm, vorzugsweise kleiner gleich 20 mm, insbesondere kleiner gleich 10 mm und besonders bevorzugt kleiner gleich 5 mm.

Durch entsprechende Materialauswahl kann die Leitung bzw. der Leitungsverbund des Vakuumssystems bei Raumtemperatur biegsam ausgestaltet werden. Die Materialien, insbesondere zur Herstellung der Innenleitung bzw. des Außenmantels sind allgemein bekannt, wobei diese insbesondere in den zuvor dargelegten Druckschriften aufgeführt sind. Vorzugsweise kann die Leitung bzw. der Leitungsverbund eines erfindungsgemäßen Isolationssystem einen Biegeradius von höchstens 20 m, besonders bevorzugt höchstens 10 m, insbesondere bevorzugt höchstens 5 m und ganz besonders bevorzugt höchstens 1,5 m aufweisen. Der Biegeradius ergibt sich aus der maximalen Krümmung, die ohne Beschädigung der Leitung bzw. des Leitungsverbundes erzielt werden kann. Beschädigung bedeutet, dass das System den Anforderungen nicht mehr genügt.

Neben einem Leitungssystem kann ein erfindungsgemäßes Isolationssystem, insbesondere ein Vakuumisolationssystem weitere Komponenten umfassen. Hierzu gehören insbesondere Wärmetauscher, Pumpen, Kontrollsysteme und Zu- beziehungsweise Ableitungssysteme. Die Kontrollsysteme können insbesondere auch Komponenten umfassen, die innerhalb des Leitungssystems eingefügt werden. Dementsprechend können diese Leitungssysteme auch Leitungen umfassen, die elektrische Signale übertragen können.

Überraschend können die Eigenschaften von Vakuumisolationssystemen durch die Verwendung von Hochleistungskunststofffasern als Isolationsmaterial verbessert werden. Hierdurch gelingt es überraschend eine hohe Isolationsleistung mit einer einfachen und problemlosen Verarbeitung des Systems zu verknüpfen.

## Patentansprüche

1. Faserverbund umfassend Hochleistungskunststofffasern und Bindefasern,
wobei der Faserverbund mindestens 70 Gew.-% Hochleistungskunststöfffäsern und höchstens 30 Gew.-% Bindefasern umfasst, **dadurch gekennzeichnet, dass** der Faserverbund eine Dichte gemessen bei einer Belastung quer zur Ebene der Hauptorientierung der Fasern von 1 mbar bis 1000 mbar im Bereich von 50 bis 300 kg/m³ sowie eine schichtartige Anordnung der Fasern aufweist, wobei mindestens ein Teil der Fasern durch Berührungspunkte miteinander verbunden ist, die durch ein Erweichen der Bindefasern erhältlich sind und dass die Hochleistungskunststofffasern eine nicht-kreisförmige Querschnittsform aufweisen.

2. Faserverbund gemäß Anspruch 1, dadurch gekennchnet dass die Hochieistungskunststofffasern einen Schmelzpunkt oder eine Glasübergangstemperatur von mindestens 200°C aufweisen und Polyimidfasern, Polybenzimidazolfasern, Polyaramidfasern, Polyetherketonfasern und/oder Polyphenylensulfidfasern umfassen.

3. Faserwerbund gemäß mindestens einem der vorhergehenden Ansprüche, **dadurch gekennzeichnet, dass** die Bindefasern einen Schmelzpunkt oder eine Glasübergangstemperatur von höchstens 180°C aufweisen und Polyolefinfasern, Acrylfasern, Polyacetatfasern, Polyesterfasern und/oder Polyamidfasern umfassen.

4. Faserverbund gemäß mindestens einem der vorhergehenden Ansprüche, **dadurch gekennzeichnet, dass** die Hachleistungskunststofffasern und/oder die Bindefasern einem Durchmesser im Bereich von 1 bis 50 µm und/oder eine Faserstärke im Bereich von 0,05 bis 10 dtex aufweisen.

5. Faserverbund gemäß mindestens einem der vorhergehenden Ansprüche, **dadurch gekennzeichnet, dass** der Faserverbund eine Dichte im Bereich von 100 bis 150 kg/m³ aufweist.

6. Faserverbund gemäß mindestens einem der vorhergehenden Ansprüche, **dadurch gekennzeichnet, dass** die Fasern innerhalb der Ebenen der schichtartigen Anordnung eine Hauptorientierung aufweisen, bevorzugt derart, dass die Orientierungen der Fasern verschiedener Ebenen einen Winkel zueinander aufweisen und besonders bevorzugt derart, dass der Winkel, den die orientierten Fasern verschiedener Ebenen zueinander aufweisen, im Bereich von 5 bis 175° liegt.

7. Faserverbund gemäß einem der vorhergehenden Ansprüche, **dadurch gekennzeichnet, dass** die Hochleistungskunststofffasern eine trilobale Querschnittsform aufweisen.

8. Faserverbund gemäß einem der vorhergehenden Ansprüche, **dadurch gekennzeichnet, dass** die Querschnittsform Ausbuchungen und Einbuchtungen aufweist und die Ausbuchungen einen äußeren Radius und die Einbuchtungen einen inneren Radius bilden, wobei das Verhältnis von äußerem Radius zu innerem Radius mindestens 1,2 beträgt.

9. Faserverbund gemäß mindestens einem der vorhergehenden Ansprüche, **dadurch gekennzeichnet, dass** die mittlere Wärmeleitfähigkeit gemessen senkrecht zu den Ebenen der schichtförmigen Anordnung höchstens 10,0*10⁻³ W(mK)⁻¹ beträgt und/oder dass die Hochleistungsfasern eine Kräuselung aufweisen, bevorzugt so, dass die Kräuselung im Bereich von 3 bis 10 pro cm liegt.

10. Verwendung eines Faserverbundes gemäß mindestens einem der Ansprüche 1 bis 9 als Isolationsmaterial, bevorzugt in einem Vakuumisolationssystem.

11. Isolationssystem, bevorzugt ein Vakuumisolationssystem, aufweisend mindestens einen Faserverbund gemäß einem der Ansprüche 1 bis 9.

12. Isolationssystem nach Anspruch 11, **dadurch gekennzeichnet, dass** das Vakuum durch das Verfestigen oder das Kondensieren eines sich in dem Vakuumsystem befindlichen Fluids, bevorzugt einem Fluid umfassend Stickstoff, Sauerstoff, Kohlendioxid und/oder einen leichtflüchtigen Kohlenwasserstoff, gebildet wird.

13. Isolationssystem gemäß mindestens einem der Ansprüche 11 oder 12, **dadurch gekennzeichnet, dass** das Vakuumisolationssystem mindestens eine Leitung umfasst, in der ein cryogenes Fluid transportiert werden kann.

14. Isolationssystem gemäß Anspruch 13, **dadurch gekennzeichnet, dass** die Leitung mindestens eine Innenleitung und einen Außenmantel, bevorzugt einem mit einer Metallschicht versehen Außenmantel, umfasst, wobei das cryogene Fluid durch die Innenleitung geleitet wird und der Außenmantel die Leitung gegenüber der Umgebung abschließt, so dass sich zwischen der Innenleitung und dem Außenmantel ein Vakuum ausbilden kann.

15. Isolationssystem gemäß mindestens einem der Ansprüche 13 oder 14, **dadurch gekennzeichnet, dass** die Leitung ein Leitungsverbund ist, bevorzugt einen Leitungsverbund umfassend mindestens zwei Innenleitungen, wobei eine Innenleitung zum Ableiten von Gasen und/oder zum Leiten eines Energieüberträgermediums vorgesehen ist.

16. Isolationssystem gemäß mindestens einem der Ansprüche 14 oder 15, **dadurch gekennzeichnet, dass** der innere Durchmesser der Innenleitung kleiner oder gleich 50 mm ist.

17. Isolationssystem gemäß Anspruch 15, **dadurch gekennzeichnet, dass** der Leitungsverbund mindestens eine Daten- und/oder Stromleitung umfasst und/oder mindestens einen Wärmetauscher aufweist.

18. Isolationssystem gemäß mindestens einem der Ansprüche 13 bis 17, **dadurch gekennzeichnet, dass** die Leitung bei Raumtemperatur biegsam, bevorzugt mit einem Biegeradius von höchstens 20 m, ist.

## Claims

1. Fibre assembly comprising high-performance polymeric fibres and bonding fibres, the fibre assembly comprising at least 70% by weight of high-performance polymeric fibres and at most 30% by weight of bonding fibres, **characterized in that** the fibre assembly has a density, measured at a load transversely to the plane of the main orientation of fibres of from 1 mbar to 1000 mbar, in the range from 50 to 300 kg/m³ and a layered arrangement of the fibres, at least some of the fibres being bonded together by points of contact obtainable by softening of the bonding fibres and **in that** the high-performance polymeric fibres have a non-circular cross-sectional shape.

2. Fibre assembly according to Claim 1, **characterized in that** the high-performance polymeric fibres have a melting point or a glass transition temperature of at least 200°C and comprise polyimide fibres, polybenzimidazole fibres, polyaramid fibres, polyether ketone fibres and/or polyphenylene sulfide fibres.

3. Fibre assembly according to at least one of the preceding claims, **characterized in that** the bonding fibres have a melting point or a glass transition temperature of at most 180°C and comprise polyolefin fibres, acrylic fibres, polyacetate fibres, polyester fibres and/or polyamide fibres.

4. Fibre assembly according to at least one of the preceding claims, **characterized in that** the high-performance polymeric fibres and/or the bonding fibres have a diameter in the range from 1 to 50 µm and/or a linear density in the range from 0.05 to 10 dtex.

5. Fibre assembly according to at least one of the preceding claims, **characterized in that** the fibre assembly has a density in the range from 100 to 150 kg/m³.

6. Fibre assembly according to at least one of the preceding claims, **characterized in that** the fibres within the planes of the layered arrangement have a main orientation, preferably such that the orientations of the fibres of different planes form an angle relative to each other and more preferably such that the angle formed by the oriented fibres of different planes is in the range from 5 to 175 °.

7. Fibre assembly according to any preceding claim, **characterized in that** the high-performance polymeric fibres have a trilobal cross-sectional shape.

8. Fibre assembly according to any preceding claim, **characterized in that** the cross-sectional shape comprises bulges and indentations and the bulges form an outer radius and the indentations form an inner radius, the ratio of outer radius to inner radius being at least 1.2.

9. Fibre assembly according to at least one of the preceding claims, **characterized in that** the average thermal conductivity measured perpendicularly to the planes of the layered arrangement is at most 10.0*10⁻³ W(mK)⁻¹ and/or **in that** the high-performance fibres have a crimp, preferably such that the crimp is in the range from 3 to 10 per cm.

10. Use of a fibre assembly according to at least one of Claims 1 to 9 as an insulation material, preferably in a vacuum insulation system.

11. Insulation system, preferably a vacuum insulation system, comprising at least one fibre assembly according to any one of Claims 1 to 9.

12. Insulation system according to Claim 11, **characterized in that** the vacuum is formed by a fluid in the vacuum system, preferably a fluid comprising nitrogen, oxygen, carbon dioxide and/or a volatile hydrocarbon, undergoing solidification or condensation.

13. Insulation system according to at least one of Claims 11 or 12, **characterized in that** the vacuum insulation system comprises at least one line in which a cryogenic fluid can be transported.

14. Insulation system according to Claim 13, **characterized in that** the line comprises at least one inner line and an outer sheath, preferably an outer sheath bearing a coat of metal, the cryogenic fluid being conducted through the inner line and the outer sheath shutting the line off from the environment, so that a vacuum can form between the inner line and the outer sheath.

15. Insulation system according to at least one of Claims 13 and 14, **characterized in that** the line is a line assembly, preferably a line assembly comprising at least two inner lines, one inner line being provided for conducting away gases and/or for conducting an energy transfer medium.

16. Insulation system according to at least one of Claims 14 or 15, **characterized in that** the inner diameter of the inner line is not more than 50 mm.

17. Insulation system according to Claim 15, **characterized in that** the line assembly comprises at least one data and/or electric power line and/or includes at least one heat exchanger.

18. Insulation system according to at least one of Claims 13 to 17, **characterized in that** the line is bendable at room temperature, preferably with a bending radius of at most 20 m.

## Revendications

1. Composite fibreux comprenant des fibres plastiques hautes performances et des fibres liantes, le composite fibreux comprenant au moins 70 % en poids de fibres plastiques hautes performances et au plus 30 % en poids de fibres liantes, **caractérisé en ce que** le composite fibreux présente une densité, mesurée à une charge perpendiculaire au plan de l'orientation principale des fibres de 1 mbar à 1 000 mbar, dans la plage allant de 50 à 300 kg/m³, ainsi qu'un agencement en couches des fibres, au moins une partie des fibres étant reliées les unes avec les autres par des points de contact qui peuvent être obtenus par un ramollissement des fibres liantes, et **en ce que** les fibres plastiques hautes performances présentent une section non circulaire.

2. Composite fibreux selon la revendication 1, **caractérisé en ce que** les fibres plastiques hautes performances présentent un point de fusion ou une température de transition vitreuse d'au moins 200 °C, et comprennent des fibres de polyimide, des fibres de polybenzimidazole, des fibres de polyaramide, des fibres de polyéthercétone et/ou des fibres de sulfure de polyphénylène.

3. Composite fibreux selon au moins l'une quelconque des revendications précédentes, **caractérisé en ce que** les fibres liantes présentent un point de fusion ou une température de transition vitreuse d'au plus 180 °C, et comprennent des fibres de polyoléfine, des fibres acryliques, des fibres de polyacétate, des fibres de polyester et/ou des fibres de polyamide.

4. Composite fibreux selon au moins l'une quelconque des revendications précédentes, **caractérisé en ce que** les fibres plastiques hautes performances et/ou les fibres liantes présentent un diamètre dans la plage allant de 1 à 50 µm et/ou une épaisseur de fibre dans la plage allant de 0,05 à 10 dtex.

5. Composite fibreux selon au moins l'une quelconque des revendications précédentes, **caractérisé en ce que** le composite fibreux présente une densité dans la plage allant de 100 à 150 kg/m³.

6. Composite fibreux selon au moins l'une quelconque des revendications précédentes, **caractérisé en ce que** les fibres présentent une orientation principale dans les plans de l'agencement en couches, de préférence telle que les orientations des fibres de différents plans présentent un angle les unes par rapport aux autres, et de manière particulièrement préférée telle que l'angle que les fibres orientées de différents plans présentent les unes par rapport aux autres se situe dans la plage allant de 5 à 175°.

7. Composite fibreux selon l'une quelconque des revendications précédentes, **caractérisé en ce que** les fibres plastiques hautes performances présentent une section trilobale.

8. Composite fibreux selon l'une quelconque des revendications précédentes, **caractérisé en ce que** la section présente des convexités et des concavités, et les convexités forment un rayon extérieur et les concavités un rayon intérieur, le rapport entre le rayon extérieur et le rayon intérieur étant d'au moins 1, 2 .

9. Composite fibreux selon au moins l'une quelconque des revendications précédentes, **caractérisé en ce que** la conductivité thermique moyenne mesurée perpendiculairement aux plans de l'agencement en couches est d'au plus 10,0 * 10⁻³ W(mK)⁻¹ et/ou **en ce que** les fibres hautes performances présentent une frisure, de préférence telle que la frisure se situe dans la plage allant de 3 à 10 par cm.

10. Utilisation d'un composite fibreux selon au moins l'une quelconque des revendications 1 à 9 en tant que matériau isolant, de préférence dans un système d'isolation sous vide.

11. Système d'isolation, de préférence système d'isolation sous vide, comprenant au moins un composite fibreux selon l'une quelconque des revendications 1 à 9.

12. Système d'isolation selon la revendication 11, **caractérisé en ce que** le vide est formé par la solidification ou la condensation d'un fluide se trouvant dans le système sous vide, de préférence d'un fluide comprenant de l'azote, de l'oxygène, du dioxyde de carbone et/ou un hydrocarbure hautement volatil.

13. Système d'isolation selon au moins l'une quelconque des revendications 11 ou 12, **caractérisé en ce que** le système d'isolation sous vide comprend au moins une conduite dans laquelle un fluide cryogène peut être transporté.

14. Système d'isolation selon la revendication 13, **caractérisé en ce que** la conduite comprend au moins une conduite intérieure et une enveloppe extérieure, de préférence une enveloppe extérieure munie d'une couche métallique, le fluide cryogène passant dans la conduite intérieure et l'enveloppe extérieure isolant la conduite de l'environnement de manière à ce qu'un vide puisse se former entre la conduite intérieure et l'enveloppe extérieure.

15. Système d'isolation selon au moins l'une quelconque des revendications 13 ou 14, **caractérisé en ce que** la conduite est une combinaison de conduites, de préférence une combinaison de conduites comprenant au moins deux conduites intérieures, une conduite intérieure étant prévue pour le déchargement de gaz et/ou pour la conduite d'un milieu de transfert d'énergie.

16. Système d'isolation selon au moins l'une quelconque des revendications 14 ou 15, **caractérisé en ce que** le diamètre intérieur de la conduite intérieure est inférieur ou égal à 50 mm.

17. Système d'isolation selon la revendication 15, **caractérisé en ce que** la combinaison de conduites comprend au moins une ligne de données et/ou de courant et/ou comprend au moins un échangeur de chaleur.

18. Système d'isolation selon au moins l'une quelconque des revendications 13 à 17, **caractérisé en ce que** la conduite est pliable à température ambiante, de préférence avec un rayon de pliage d'au plus 20 m.
